# EUROPEAN PATENT SPECIFICATION

(11) **EP 2 816 416 B1**
(45) Date of publication and mention of the grant of the patent: **10.10.2018**
(21) Application number: 14170678.8
(22) Date of filing: 30.05.2014
(51) Int. Cl.: G03G 15/00, G06F 3/0482, G06F 3/0488

(54) **Display device, image forming apparatus, and computer-readable recording medium storing display control program**
Anzeigevorrichtung, Bilderzeugungsvorrichtung und computerlesbares Aufzeichnungsmedium mit darauf gespeichertem Anzeigesteuerungsprogramm
Dispositif d'affichage, appareil de formation d'image et support d'enregistrement lisible par ordinateur stockant un programme de commande d'affichage

(30) Priority: 19.06.2013 JP 2013128125
(43) Date of publication of application: 24.12.2014
(73) Proprietor: Konica Minolta, Inc., Tokyo 100-7014 (JP)
(72) Inventor: Miyazaki, Ken, Chiyoda-Ku, Tokyo 1007014 (JP)
(74) Representative: Raynor, Simon Mark

(56) References cited:
- GB-A- 2 329 813
- JP-A- H08 101 759
- JP-A- 2009 087 224
- JP-A- 2011 096 167

## Description

### Field of the Invention

The present invention relates to a display device including a plurality of input units, an image forming apparatus including the display device, and a computer-readable recording medium storing a display control program for a display device including a plurality of input units.

### Description of the Related Art

An image forming apparatus such as a production printer (PP) includes a display device that displays a screen on which setting or the like is to be performed and that allows an operator to perform operation input. In the display device provided to the image forming apparatus, a customer is not allowed to freely select the size of a display as in the case of a personal computer, due to, for example, a restriction of space for the mechanism of the image forming apparatus, and a display unit of a relatively small area is adopted. In recent years, a display unit and a touch panel combined as a GUI (Graphical User Interface) are widely used.

Now, in the image forming apparatus including the touch panel, programs are designed on the premise that items necessary for setting are displayed on a display unit of a small area and finger operation is to be performed to the items, and thus, the number of buttons that can be arranged in one screen is limited and it is difficult to enable both setting and checking of a list. Accordingly, normally, the image forming apparatus displays a menu by dividing the menu into a plurality of hierarchical levels. Particularly, a production printer has such a large number of setting items that the setting items do not fit in one screen, and it requires time and effort to check the current setting value or to reach a desired setting menu. Because a production printer places an emphasis on productivity, there is a strong demand for a swift setting check to secure an operation time.

Display device are known from GB2329813, JPH08101759 and JP2009087224.

Japanese Patent Laid-Open No. 2007-11459 and Japanese Patent Laid-Open No. 2005-100199 propose apparatuses and systems whose operability is increased by providing a plurality of input units to a display device.

Specifically, Japanese Patent Laid-Open No. 2007-11459 discloses an image forming apparatus which allows a touch panel and a mouse to be used in combination as input units, which sets a display mode of a second screen for displaying items on the next hierarchical level or the like and which allows fixing of a setting by a different method according to the type of the input unit regarding which an operation on a first screen has been performed.

Japanese Patent Laid-Open No. 2005-100199 discloses a control device which creates a virtual screen according to an enlargement or reduction instruction for a display region from an input unit, and which performs image display on a display device.

Also, Japanese Patent Laid-Open No. 6-150176 discloses a system including a touch screen function, where the system displays, when point input is needed, a dedicated screen for mouse input on a touch screen and generates point input data based on the touch state on the screen.

However, none of Japanese Patent Laid-Open No. 2007-11459, Japanese Patent Laid-Open No. 2005-100199 and Japanese Patent Laid-Open No. 6-150176 described above aims to reduce a plurality of hierarchical levels of menu display, and the object of performing a setting check in a swift manner cannot be achieved.

For example, the image forming apparatus of Japanese Patent Laid-Open No. 2007-11459 applies different setting fixing methods depending on the input unit, but it cannot reduce the hierarchical levels of menu display.

Also, according to Japanese Patent Laid-Open No. 2005-100199, a display region is simply changed by enlargement or reduction according to operation of different input units, and the hierarchical levels of menu display cannot be reduced.

Furthermore, Japanese Patent Laid-Open No. 6-150176 is not premised on inclusion of a plurality of input units, and the hierarchical levels of menu display cannot be reduced.

The present invention has been made under the circumstances described above, and has at least an object to provide a display device, including a plurality of input units, which displays a large number of menus in one screen and facilitates a search for a desired setting menu, an image forming apparatus, and a computer-readable recording medium storing a display control program.

### SUMMARY OF THE INVENTION

To achieve at least one of the objects described above, a display device of a first aspect of the present invention is a display device according to appended claims 1-12.

To achieve at least one of the objects described above, an image forming apparatus of a second aspect of the present invention is an image forming apparatus according to appended claims 13 and 14.

To achieve at least one of the objects described above, a computer-readable recording medium storing a display control program of a third aspect of the present invention is a computer-readable recording medium storing a display control program according to appended claims 15-19.

### BRIEF DESCRIPTION OF THE DRAWINGS

FIG. 1 is a schematic diagram showing an embodiment of an image forming apparatus including a display device of the present invention;
FIG. 2 is a diagram showing a control block;
FIG. 3 is a schematic diagram of the image forming apparatus, also schematically showing a touch operation screen and a mouse operation screen of the display device;
FIG. 4 is a diagram for describing hierarchical levels of the touch operation screen;
FIG. 5 is a diagram showing the mouse operation screen;
FIG. 6 is a diagram showing a mouse operation screen of a tree structure;
FIG. 7 is a diagram showing a shared display screen and the mouse operation screen;
FIG. 8 is a flow chart showing a procedure of a screen transition process, also schematically showing operation screens;
FIG. 9 is a flow chart showing a procedure of mouse operation determination;
FIG. 10 is a diagram showing a setting screen for a switching process for the touch operation screen and the mouse operation screen;
FIG. 11 is a flow chart showing a processing procedure for a button operation on the mouse operation screen;
FIG. 12 is a diagram showing the mouse operation screen on which an alarm is displayed when a touch operation is performed on the mouse operation screen;
FIG. 13 is a diagram showing the mouse operation screen on which an each-time confirmation screen for when a touch operation is performed on the mouse operation screen is displayed; and
FIG. 14 is a diagram showing the mouse operation screen, at a time when a touch operation is performed on the mouse operation screen, where a screen is displayed in such a way that the touch position and its periphery are shown in an enlarged manner.

### DETAILED DESCRIPTION OF THE INPREFERRED EMBODIMENTS

Hereinafter, an embodiment of an image forming apparatus including a display device of the present invention will be described with appended drawings.

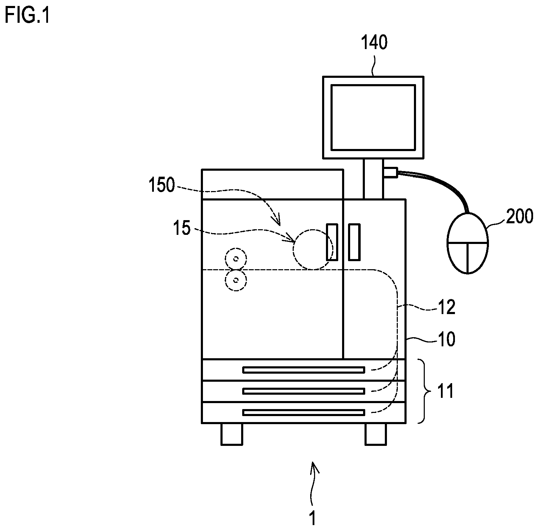

An image forming apparatus 1 shown in FIG. 1 includes, on an image forming apparatus main body 10, a display unit 140 that is provided with a touch panel, and also, a mouse 200 that is capable of being attached/detached by a USB connector. The touch panel and the mouse 200 correspond to input units of the present invention, and the touch panel, the mouse 200, and the display unit 140 configure the display device of the present invention. Additionally, the mouse 200 can be connected not only by the USB connector, but any appropriate connection method can be applied, such as a serial connector or wireless connection. Additionally, in this embodiment, the image forming apparatus main body 10 to which the USB connector is attached corresponds to a display device main body of the present invention.

The image forming apparatus 1 includes, inside the image forming apparatus main body 10, a paper feed tray 11, a conveying apparatus 12, and an image forming unit 15, and a printer unit 150 is configured mainly by these elements. At the printer unit 150, an image is formed by the image forming unit 15 on a paper that is fed from the paper feed tray 11 through the conveying apparatus 12.

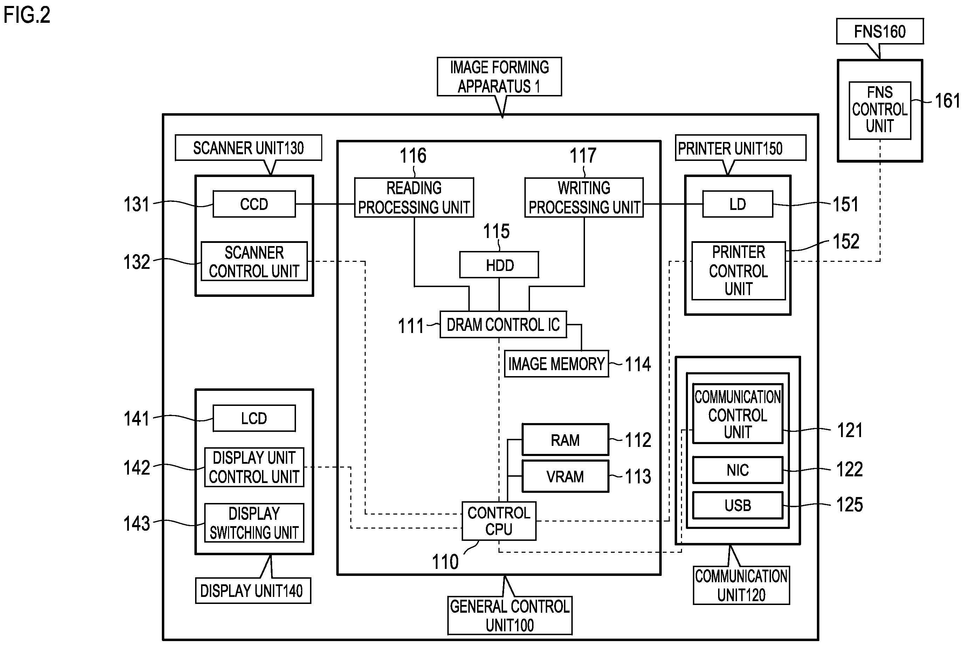

FIG. 2 is a diagram showing a control block of the image forming apparatus 1.

The image forming apparatus 1 includes, as main elements, a general control unit 100, a scanner unit 130, the display unit 140, and the printer unit 150. Also, in this embodiment, an FNS 160 as a post-processing apparatus is connected, as a part of the image forming apparatus, to the image forming apparatus main body. Additionally, the presence or absence of a post-processing apparatus is not strictly set for the present invention.

The general control unit 100 includes a control CPU 110, and a DRAM control IC 111 is connected to the control CPU 110. A RAM 112 and a VRAM 113 are connected to the control CPU 110.

The control CPU 110 is for controlling the entire image forming apparatus 1 by executing programs such as apparatus control firmware (FW), and for grasping the state of the entire image forming apparatus 1.

The scanner unit 130 includes a CCD 131 for performing optical reading, and a scanner control unit 132 for controlling the entire scanner unit 130. The scanner control unit 132 is connected to the control CPU 110, and is controlled by the control CPU 110. The scanner control unit 132 can be configured by a CPU, a program for operating the same, and the like. Data processing is performed, at a reading processing unit 116, on image information read by the CCD 131. The reading processing unit 116 is connected to the DRAM control IC 111, and the image data on which data processing has been performed at the reading processing unit 116 is transmitted to the DRAM control IC 111.

The RAM 112 will be loaded the apparatus control firmware, display control programs, programs for a printer driver, and the like and is used for the execution of the same, and also, is used as a work area for the execution.

The display unit 140 includes an LCD 141 including a touch panel, and a display unit control unit 142, and the LCD 141 and the display unit control unit 142 are connected, and the display unit control unit 142 and the control CPU 110 are connected in a manner capable of serial communication. According to this configuration, control of the display unit 140 is performed by the control CPU 110 in which a display control program is operating, a screen image drawn in the VRAM 113 is displayed on the LCD 141, and input information of the display unit 140 is transmitted to the control CPU 110. Additionally, the display unit control unit 142 can be configured by a CPU, a program for operating the same, and the like. The display unit 140 includes a display switching unit 143. If screen created by the apparatus control firmware is selectively drawing in a storage area of the VRAM 113 corresponding to a predetermined region in a screen displayed by the display unit 140, the display switching unit 143 enables display of the screens on the display unit 140 while switching between the screens.

Also, the DRAM control IC 111 is connected to an image memory 114. Image information acquired by the scanner unit 130, image information through a LAN not shown or the like, printing conditions, file information and the like acquired and the like are stored in the image memory 114. As described, the image memory 114 is a storage area for image information, printing conditions, and file information, and stores information about a printing job.

Also, an HDD 115 is connected to the DRAM control IC 111. An area for storing programs, file data, a printer driver, image information, printing information, and the like are allotted to the HDD 115, and reading and writing of data is performed through the DRAM control IC 111.

Furthermore, a writing processing unit 117 is connected to the DRAM control IC 111. The writing processing unit 117 is connected to an LD 151 of the printer unit 150, and processes data that is to be used in the operation of the LD 151 based on image data that is transmitted through the DRAM control IC 111. Also, the printer unit 150 includes a printer control unit 152 for controlling the entire printer unit 150, and the printer control unit 152 is connected to, and is controlled by, the control CPU 110 described above. An FNS control unit 161 for controlling the entire FNS 160 is connected to the printer control unit 152. Therefore, the FNS 160 can be controlled by the control CPU 110 through the printer control unit 152.

Furthermore, a communication control unit 121 for controlling entire communication unit 120 for performing communication with outside is connected to the control CPU 110, and the communication control unit 121 is capable of being connected to a LAN, not shown, through an NIC 122 (network interface card) included in the communication unit 120. The communication control unit 121 operates according to an operation command from the control CPU 110, and transmits data transferred from the control CPU 110 by a communication procedure determined in advance to the LAN through the NIC 122, or receives data transmitted from the LAN through the NIC 122 and transmits the data to the control CPU 110. Also, an USB interface 125 is provided to the communication unit 120, and the communication unit 120 is capable of performing communication between the control CPU 110 and an external USB device through connection to the external USB device, for example, the mouse 200.

The control CPU 110 configures a control unit of the present invention together with at least the display unit control unit 142, the display switching unit 143, the communication control unit 121, and the like.

Next, a basic operation of the image forming apparatus 1 will be described.

First, a procedure for accumulating image information at the image forming apparatus 1 will be described.

First, in the case of reading an image of an original document and generating image information by the scanner unit 130 at the image forming apparatus 1, the image of the original document is optically read, at the scanner unit 130, by the CCD 131 from the original document. At this time, the operation of the CCD 131 is controlled by the scanner control unit 132 receiving a command from the control CPU 110.

The image read by the CCD 131 is subjected to data processing at the reading processing unit 116, and the image information on which data processing has been performed is stored in the image memory 114 or the HDD 115 through the DRAM control IC 111. The image information or printing information stored in the image memory 114 or the HDD 115 can be managed as a job by the control CPU 110.

In the case of acquiring image information from outside, job information transmitted from an image forming apparatus, a PC, or the like, not shown, through the LAN or the like is stored in the image memory 114 or the HDD 115 by the DRAM control IC 111 through the NIC 122 and the control CPU 110.

Also, in the case of generating image information at the image forming apparatus 1 by an application, image information that is obtained through the printer driver or the apparatus control firmware is stored in the image memory 114 or the HDD 155 in the same manner as described above. At this time print data transmitted from the printer driver can be received as a job of the image forming apparatus 1, and saving, execution or the like of the job can be performed.

In the case image information that is acquired from the outside or by an application operating on the image forming apparatus 1 is vector data, RIP processing (Raster Image Processing) is performed by a controller at an appropriate timing.

In the case the image forming apparatus 1 is to perform image output, that is, in the case the image forming apparatus 1 is to be used as a copier or a printer, job information including image information stored in the image memory 114 or the HDD 115 is transmitted to the writing processing unit 117 through the DRAM control IC 111, and write data is transmitted from the writing processing unit 117 to the printer unit 150.

At the printer unit 150, the surface of a photoreceptor is uniformly charged by a charging unit, not shown, and then, a latent image is formed by performing exposure scanning based on the write data by a laser beam of the LD 151, and a toner image is formed on the surface of the photoreceptor forming a part of the image forming unit 15 by reverse-developing the latent image by a developing unit. Then, a paper fed from the paper feed tray 11 is sent to a transfer position by the conveying apparatus 12, and the toner image is transferred at the transfer position by a transfer unit forming a part of the image forming unit 15. Subsequently, the paper on which image forming has been performed is subjected to heat fixing by a fixing unit forming a part of the image forming unit 15, and is conveyed to the FNS 160. The FNS 160 to which papers on which image forming has been performed are to be conveyed includes a puncher for punching holes on the papers, a stapler for stapling the papers, and the like, and performs post-processing on the papers as desired.

The image forming unit 15 is configured by the charging unit, the LD 151, the developing unit, the transfer unit, the fixing unit, and the like described above.

At the time of image output, the control CPU 110 performs output based on job information. The job information includes, in addition to the image information described above, output condition information. The output condition includes information about a print mode, paper information, a paper feed tray, a paper discharge destination, a post-processing condition, and the like, and, specifically, these are the number of pixels of an output image, distinction of color or monochrome, distinction of single-sided printing or double-sided printing, tone adjustment, the size of paper, the direction of paper, the paper kind(paper type, basis weight, paper color, etc.), selection of a paper feed tray, presence/absence of post-processing, a post-processing condition, and the like.

Standard settings are determined in advance for the output condition as initial settings. Also, it is possible to set the output condition at the display unit 140. In the case of acquiring image information, the display unit control unit 142 is controlled by the control CPU 110, and a screen enabling input of output settings is displayed on the LCD 141.

When appropriate operation input is performed by an operator, the control CPU 110 is notified by the display unit control unit 142 of information about the output conditions (print mode, paper feed tray, paper discharge destination, post-processing condition, etc.) set on the display unit 140. The control CPU 110 which has received the information generates output condition information, and temporarily stores the output condition information in a memory provided to the control CPU 110. When image information is acquired, this is stored together with the image information, as job information, in the image memory 114 or the HDD 115.

Also, the control CPU 110 can be changed a menu screen to be displayed by the display unit 140 depending on the type of the input unit.

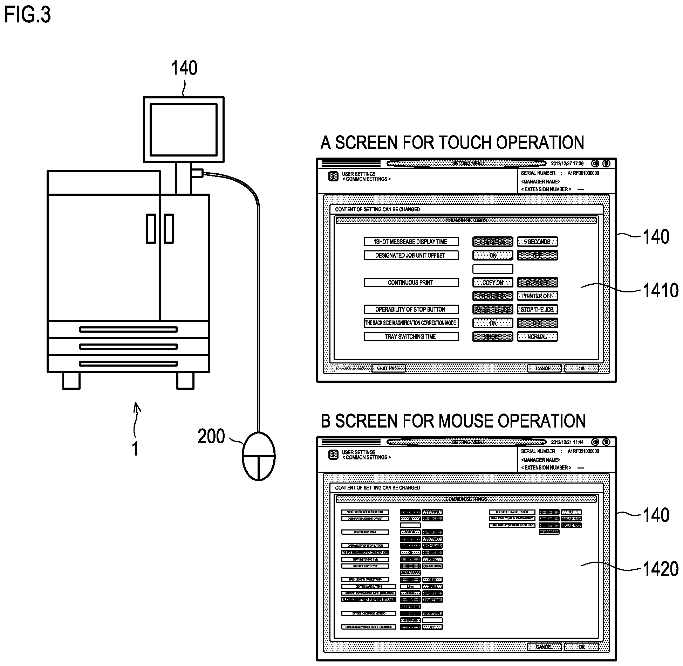

FIG. 3 schematically shows the image forming apparatus 1, and screens displayed by the display unit of the image forming apparatus 1. Here, the touch panel corresponds to a first input unit, and the mouse 200 corresponds to a second input unit. Item display of menu display on a first input unit operation screen 1410 corresponding to the touch panel is relatively large with the size being such that operation by a finger of an operator is facilitated. Item display of menu display on a second input unit operation screen 1420 corresponding to the mouse 200 is relatively small, and a larger number of items are displayed compared to the case of the first input unit operation screen 1410. The mouse 200 enables selection of an item by displaying a mouse pointer or the like on the screen, and operation is easy even with small item display.

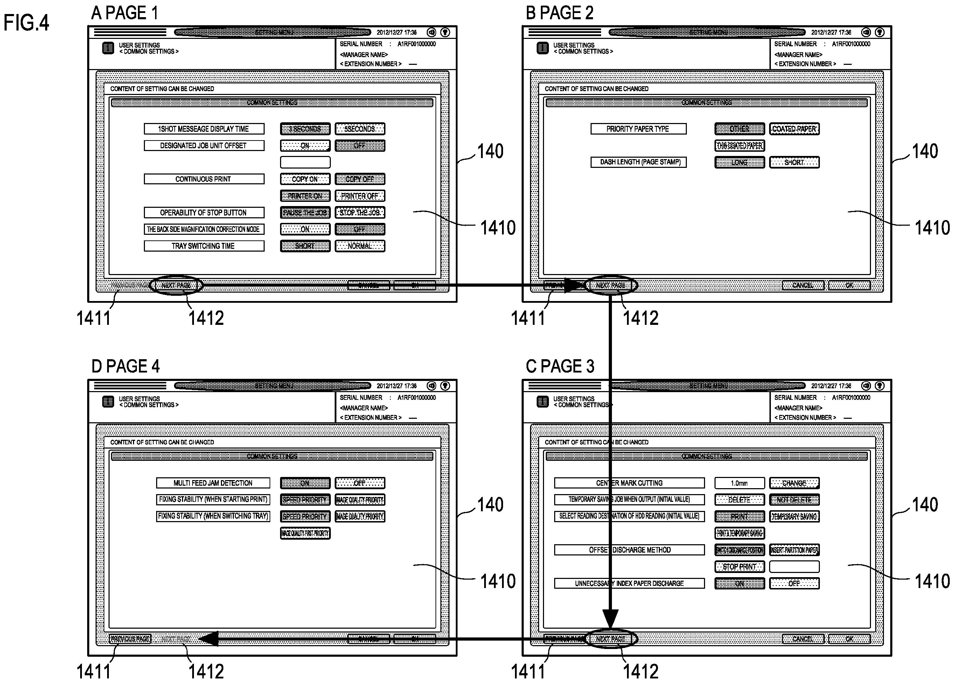

For example, a shared setting menu for user setting regarding utility setting includes function buttons for sixteen menus. Buttons are arranged on the screen for touch operation (the first input unit operation screen 1410) with a relatively large size so as to prevent erroneous operation, and, as shown in FIG. 4, display for page management is performed by providing hierarchical levels A to D for four pages (four screens), for example. Shared setting includes four pages (four screens) as shown in the Fig.4, and movement between the pages is performed by a previous page button 1411 or a next page button 1412 that are provided on the bottom left of the screen of each page. In the hierarchical level A, the previous page button 1411 is shaded and operation is disabled, and in the hierarchical level D, the next page button 1412 is shaded and operation is disabled. As described, with a touch operation screen, there is a problem that, even if screens are in the same hierarchical level, a desired menu is not reached without turning the pages.

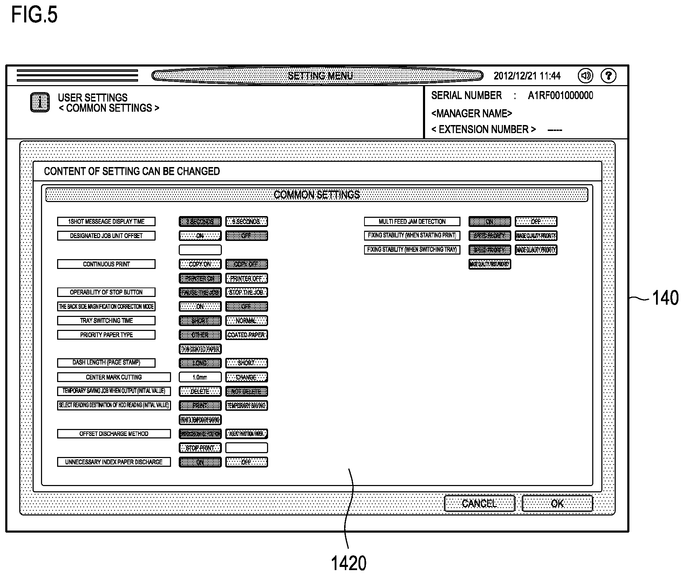

On the other hand, with the screen for mouse operation (the second input unit operation screen 1420), the layout does not have to be such that the buttons or the gap between the buttons are large as in the case for touch operation, and a layout that is specifically for the mouse can be adopted, and buttons for a larger number of items can be arranged, as shown in FIG. 5. That is, in the screen for mouse operation, the size and the arrangement gap of the buttons can be reduced, and a large number of menus can be displayed in one screen. Since the mouse allows operation on a per-dot basis, the problem regarding a detection area of finger operation can be solved.

A dedicated font or the like can be prepared for the screen for mouse operation, or a font or the like for the mouse can be created, and be displayed on the screen, by resizing the font for touch operation according to a predetermined proportion (less than 1.0; for example, half). Accordingly, with respect to the screen layout, buttons can be arranged with half the size of existing screen buttons for touch operation, for example. According to this example, all the function buttons of the menus can be displayed in one screen, and the number of menu hierarchical levels can be reduced. Also, values different from the settings at the time of shipping can be grasped with a smaller number of operations compared to the case of touch operation. Additionally, the screen for mouse operation alternatively includes hierarchical levels.

Additionally, the screen for mouse operation (the second input unit operation screen) alternatively can have a tree structure, and no problem arises even if presence or absence of tree structure display is switched by a setting, as in the case of display setting of Windows (registered trademark).

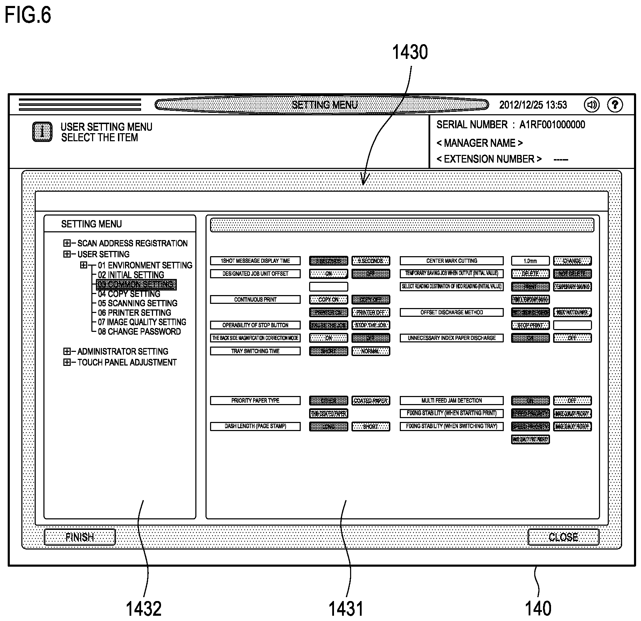

FIG. 6 shows the screen for mouse operation (a second input unit operation screen 1430) of a tree structure, and includes a menu display region 1431, and a tree display region 1432. Operation by the mouse is enabled for both the menu display region 1431 and the tree display region 1432.

Furthermore, it is also possible to display a shared display screen on the display screen on which the first input unit operation screen or the second input unit operation screen is to be displayed, in the case of display of either screen.

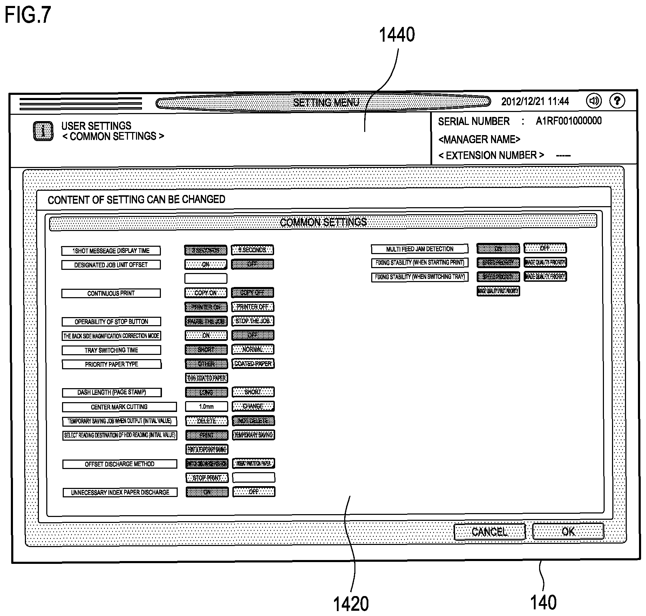

FIG. 7 shows the display unit 140 displaying the screen for mouse operation (the second input unit operation screen 1420), where a shared display screen 1440 indicating the state of the machine is displayed. Information about the state of the machine is desirably shared and displayed regardless of the type of the input unit.

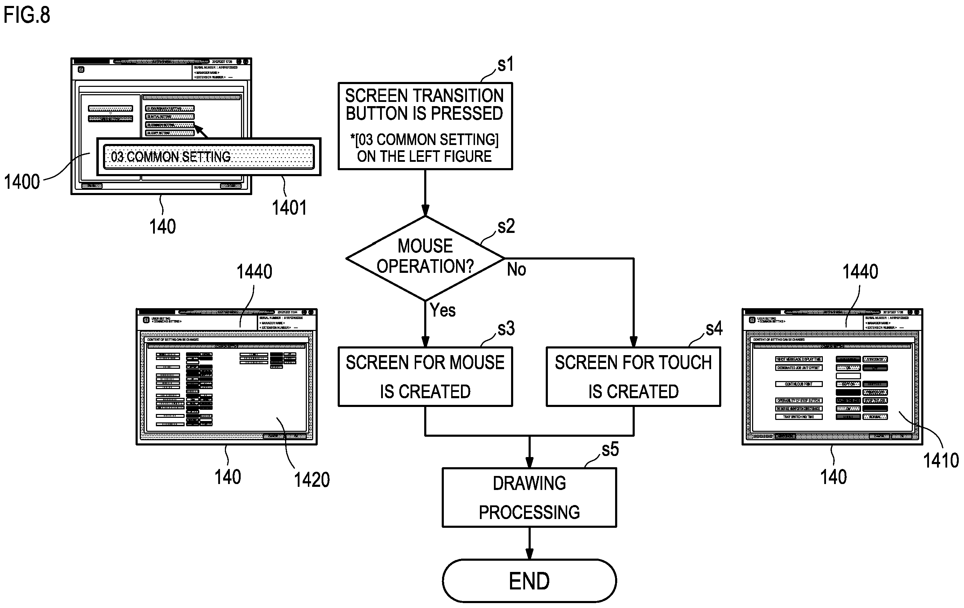

Next, transition between the screen for touch and the screen for mouse described above will be described with reference to the flow chart of FIG. 8. Additionally, the following procedure is performed by a display control program stored in a recording medium such as a non-volatile memory being executed on the control CPU 110.

With respect to screen display on the display unit 140, when display of a specific menu is selected, display by selection of the screen for touch or the screen for mouse is enabled. Prior to selection of specific menu display, setting for displaying only the screen for touch, for example, is enabled. This is because, in a state where mouse operation is not necessary, no problem arises even if only the screen for touch operation is displayed.

When a screen transition button selected in advance on a menu display screen 1400 is pressed to select specific menu display, a process for screen transition is started (step s1). The range of types of screen transition buttons is initially set by machine setting, or, alternatively, an operator is allowed to set a specific button as the screen transition button. In this example, a shared setting button 1401 displayed in the menu display screen 1400 is set as the screen transition button.

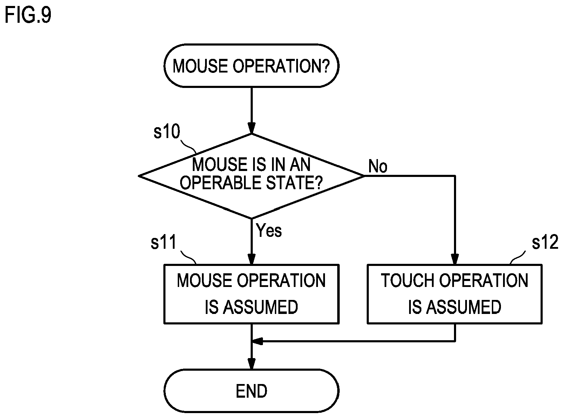

When pressing of a screen transition button is detected, a process is started, and determination regarding whether mouse operation is assumed is performed. A procedure for determining whether mouse operation is assumed is shown by the flow chart in FIG. 9. Additionally, the following procedure is performed by a display control program stored in a recording medium such as a non-volatile memory being executed on the control CPU 110.

In the determination procedure, determination of whether the display device is in a predetermined state, for example, whether the mouse is in an operable state, is performed (step s10). It is possible to perform this determination based on the machine state by acquiring the machine state of the apparatus. Grasping of a predetermined state is performed based on recognition of the apparatus configuration by the control CPU 110, for example, and when an USB mouse is connected to the USB connector, it is determined that the mouse is in an operable state.

If mouse operation is enabled, according to the determination regarding a predetermined state, mouse operation is assumed (step s11) and the process is ended, and if the mouse operation is not enabled, touch operation is assumed (step s12) and the process is ended.

If it is determined in step s2 that mouse operation is assumed (step s2: Yes), the second input unit operation screen 1420 as a screen for mouse is created (step s3) and is drawn on the display unit 140 (step s5). If it is determined that mouse operation is not assumed (step s2: No), the first input unit operation screen 1410 as a screen for touch is created (step s4) and is drawn on the display unit 140 (step s5). When displaying the first input unit operation screen 1410 or the second input unit operation screen 1420 on the display unit 140, the shared display screen 1440 can be displayed on the display unit. Creation and display of a screen can be performed through the VRAM 113.

In the case mouse operation is performed on the first input unit operation screen 1410, which is the screen for touch, after transition of the screen has taken place, it is possible to enable the mouse operation and to perform a button processing. Enabling the mouse operation causes no problem. In this case, the first input unit operation screen 1410 corresponds to the shared operation screen.

Also, in the case touch operation is performed on the second input unit operation screen 1420, which is the screen for mouse, since a large number of menu items are displayed on the second input unit operation screen 1420 and this is not a screen suitable for touch operation, a switching process is desirably performed instead of directly performing the button processing.

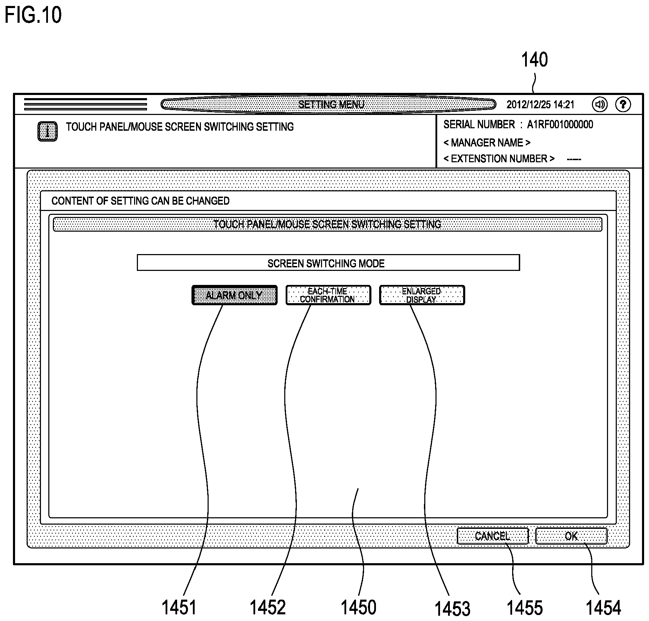

FIG. 10 shows a switching setting screen 1450 for setting processing contents to be executed at the time of the switching process. The contents of the switching process can be initially set in advance as machine setting, or an operator can determine or change the setting contents as in the case of the setting screen described above. The switching setting screen 1450 displays an alarm-only button 1451, an each-time confirmation button 1452, and an enlarged display button 1453 in a manner allowing pressing down, and also, displays an OK button 1454 and a cancel button 1455 in a manner allowing pressing down.

By pressing any one of the alarm-only button 1451, the each-time confirmation button 1452, and the enlarged display button 1453, and pressing the OK button 1454, the setting contents of the switching process are fixed, and by pressing the cancel button 1455, selection of the alarm-only button 1451, the each-time confirmation button 1452, or the enlarged display button 1453 which has been pressed once, is cancelled, and re-setting is enabled.

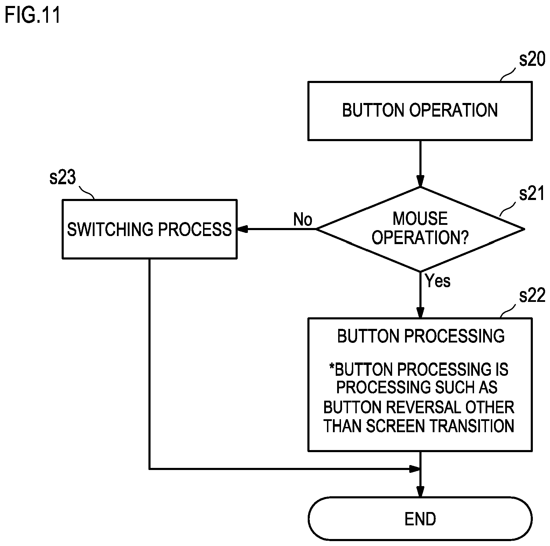

Next, a procedure for when touch operation or mouse operation is performed on the screen for mouse (the second input unit operation screen 1420) will be described based on the flow chart of FIG. 11. Additionally, the following procedure is performed by a display control program stored in a recording medium such as a non-volatile memory being executed on the control CPU 110.

When a button operation is performed on the screen (step s20), a process is started, and determination of whether the operation is mouse operation is performed (step s21). In the case of mouse operation (step s21: Yes), button processing according to the operated button is performed (step s22), and the process is ended. Additionally, button processing is processing such as button reversal other than screen transition. Furthermore, in the case it is determined by the determination of whether the operation is mouse operation (step s21) that the operation is not mouse operation (step s21: No), a predetermined switching process is performed (step s23), and the process is ended. According to this embodiment, one of alarm-only, each-time confirmation, and enlarged display is performed as the switching process according to the setting contents of the switching process.

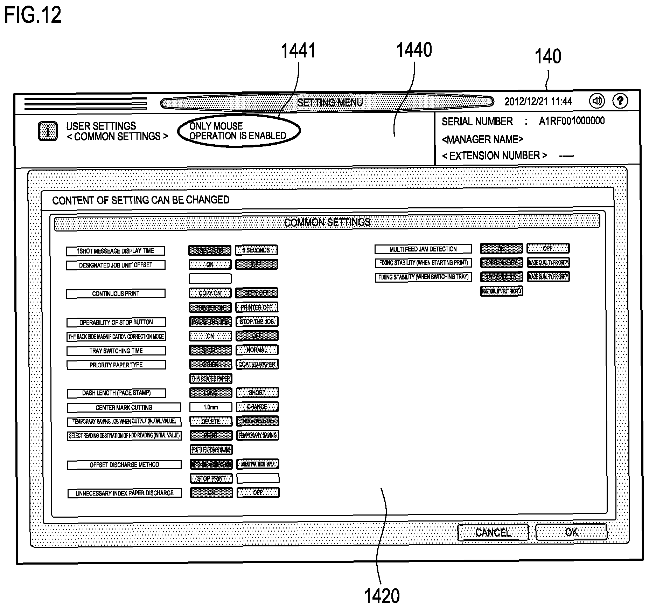

Among the switching processes mentioned above, the process of alarm-only will be described with reference to FIG. 12.

When touch operation is performed on the screen for mouse (the second input unit operation screen 1420), button processing based on the touch operation is not performed, and alarm display is performed on the screen to notify an operator of an operation mistake. In this example, the second input unit operation screen 1420 and the shared display screen 1440 are displayed on the display unit 140, and an alarm display 1441 to the effect that "only mouse operation is enabled" is displayed in the region of the shared display screen 1440. Additionally, an alarm can be issued not only by text, but also by flashing of light or display of an image or the like, or by sound or voice, for example, and the mode of alarm is not particularly limited. By issuing an alarm regarding switching between touch operation and mouse operation, erroneous operation is prevented.

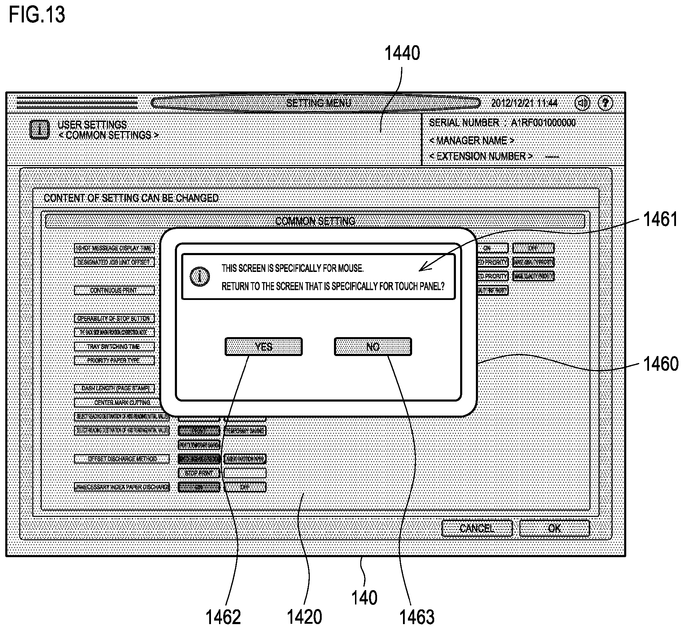

Next, among the switching processes, the process of each-time confirmation will be described with reference to FIG. 13.

When touch operation is performed on the screen for mouse (the second input unit operation screen 1420), a pop-up screen 1460 for confirmation is displayed in an overlapping manner at a part of the second input unit operation screen 1420. At this time, in preparation for an operator's desire to return to the touch operation, a button for touch operation is arranged in the pop-up screen 1460 for confirmation. That is, the pop-up screen 1460 for confirmation displays that the screen is specifically for the mouse, and displays an inquiry display 1461 for inquiring whether or not to return to the screen that is specifically for the touch panel. Furthermore, a "Yes" button 1462 and a "No" button 1463 are arranged in the pop-up screen 1460 for confirmation in a manner allowing pressing down. When the "Yes" button 1462 is selected, display on the display unit is switched from the second input unit operation screen 1420 to the first input unit operation screen 1410 to enable touch operation. Also, when the "No" button 1463 is pressed, the pop-up screen 1460 for confirmation is erased, and a state where the second input unit operation screen 1420 is displayed is achieved and mouse operation is enabled.

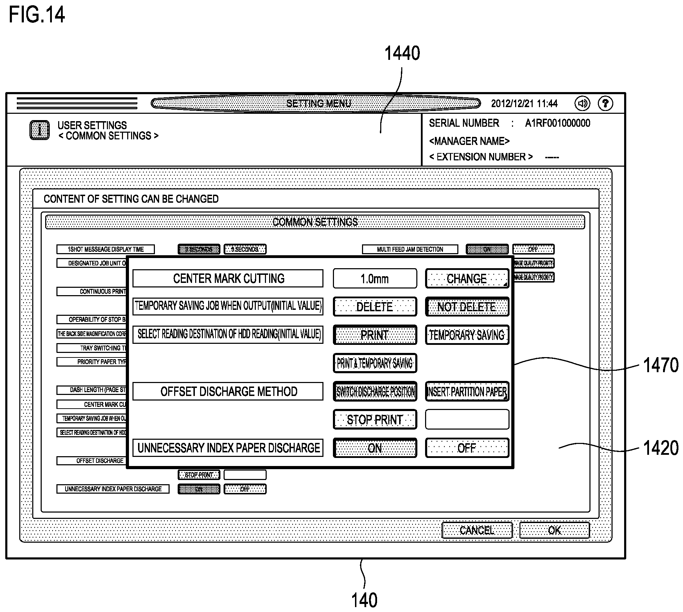

Next, among the switching processes, a process of enlarged display will be described with reference to FIG. 14.

In this process, a position in the second input unit operation screen 1420 where touch operation is performed and its periphery (in this example, three buttons in the periphery) are enlarged, and an enlarged pop-up screen 1470 as a touch operation screen is displayed in an overlapping manner at a part of the second input unit operation screen 1420. Additionally, the peripheral region to be enlarged and displayed can be set in advance. For example, this is performed by displaying the periphery which is within a predetermined distance from the touch position or by displaying a predetermined number of items in the periphery of the touch position or the like. Also, the range of the periphery can be changed depending on the touch position. Furthermore, there is no problem in separately providing a setting item, and providing a user interface for setting the range of the periphery based on the number of target buttons or the like.

In the enlarged pop-up screen 1470, an operator is allowed to press a desired item button by touch operation and to perform button processing. Also, mouse operation can be enabled in the enlarged pop-up screen 1470. Erroneous operation by touch operation can be prevented by displaying the enlarged pop-up screen 1470.

As described above, according to the present embodiment, a screen according to the input unit can be displayed, and thus, the location of a desired setting menu can be grasped by a small number of operations, and there is an effect that the productivity is increased.

Additionally, in the above, a touch panel is indicated as the first input unit and a mouse is indicated as the second input unit, but the present invention is not limited to be such, and it is also possible to use a pointing device or the like as the second input unit.

## Claims

1. A display device (140,141,200) allowing operation by two or more different input units including a first input unit (141) and a second input unit (200), the display device (140,141,200) comprising:
a display unit (140) for performing at least menu display; and
a control unit (110) for controlling the input units, and for controlling display and/or operation output of the display unit according to operation of the input units (141,200),
wherein the control unit (110) is capable of displaying, on the display unit (140), a first input unit operation screen (1410) that accommodates operation by the first input unit (141) and that includes display of a setting item, and a second input unit operation screen (1420; 1430) that accommodates operation by the second input unit (200) and that includes display of a larger number of setting items than the first input unit operation screen (1410) and
wherein the control unit (110) determines that operation of either the first input unit (141) or the second input unit (200) is assumed based on the operable state of the second input unit.

2. The display device (140,141,200) according to claim 1, wherein the control unit (110) selects and displays one of the first input unit operation screen (1410) and the second input unit operation screen (1420; 1430), or displays the first input unit operation screen (1410) and the second input unit operation screen (1420; 1430) together, on the display unit(140).

3. The display device (140,141,200) according to claim 1 or 2, wherein the control unit (110) reduces a size of item display including the setting items on the second input unit operation screen (1420; 1430) to be smaller than a size of item display including the setting item on the first input unit operation screen (1410).

4. The display device (140,141,200) according to any one of claims 1 to 3, wherein the control unit (110) displays, on the display unit (140), a shared operation screen (1440) that accommodates operation of both the first input unit (141) and the second input unit (200).

5. The display device (140,141,200) according to any one of claims 1 to 4, wherein, when the first input unit (141) or the second input unit (200) becomes operable, the control unit (110) displays the first input unit operation screen (1410) or the second input unit operation screen (1420; 1430) on the display unit(140).

6. The display device (140,141,200) according to any one of claims 1 to 5, wherein, in a case where operation is performed on any item of the menu display by the first input unit (141), the control unit (110) displays the first input unit operation screen (1410) on the display unit (140).

7. The display device (140,141,200) according to any one of claims 1 to 6, wherein, in a case where operation is performed on any item of the menu display by the second input unit (200), the control unit (110) displays the second input unit operation screen (1420; 1430) on the display unit (140).

8. The display device (140,141,200) according to any one of claims 1 to 7, wherein, in a case where operation is performed by the first input unit (141) while the second input unit operation screen (1420; 1430) is being displayed on the display unit (140), the control unit (110) issues an alarm indicating that operation of only the second input unit (200) is allowed.

9. The display device (140,141,200) according to any one of claims 1 to 8, wherein, in a case where operation is performed by the first input unit (141) while the second input unit operation screen (1420; 1430) is being displayed on the display unit (140), the control unit (110) performs display of an inquiry of whether to change to the first input unit operation screen (1410).

10. The display device (140,141,200) according to claim 9, wherein the control unit (110) displays the inquiry of whether to change to the first input unit operation screen (1410) by the first input unit operation screen (1410).

11. The display device (140,141,200) according to any one of claims 1 to 10, wherein, when operation of the first input unit (141) on a screen is detected while the second input unit operation screen (1420; 1430) is being displayed on the display unit (140), the control unit (110) displays a partial region including a detected region on the screen in an enlarged manner compared to other regions, and enables operation by the first input unit (141) on the region that is displayed in an enlarged manner.

12. The display device (140,141,200) according to any one of claims 1 to 11, wherein, in a case where operation is performed by the first input unit (141) while the second input unit operation screen (1420; 1430) is being displayed on the display unit, the control unit performs a switching process.

13. An image forming apparatus (1) comprising:
an image forming unit (15) for forming an image on a paper; and
the display device according to any one of claims 1 to 12.

14. The image forming apparatus (1) according to claim 13, wherein the control unit (110) enables display of a first input unit operation screen (1410) or a second input unit operation screen (1420; 1430) on the display unit (140) after the image forming apparatus (1) enters a ready state after completion of warming up.

15. A computer-readable recording medium storing a display control program for controlling a display device (140,141,200) including two or more different input units including a first input unit (141) and a second input unit (200) and a display unit (140) for performing at least menu display, the program including the steps of:
acquiring a state of the input units; and
displaying, on the display unit (140), according to the state, one or both of a first input unit operation screen (1410) that accommodates operation by the first input unit (141) and that includes display of a setting item, and a second input unit (200) operation screen that accommodates operation by the second input unit (200) and that includes display of a larger number of setting items than the first input unit operation screen (1410) and
determining that operation of either the first input unit (141) or the second input unit (200) is assumed based on the operable state of the second input unit.

16. The computer-readable recording medium storing the display control program according to claim 15, wherein, in the step of displaying, one of the first input unit operation screen (1410) and the second input unit operation screen (1420; 1430) is selected and displayed on the display unit (140), or the first input unit operation screen (1410) and the second input unit operation screen (1420; 1430) are displayed together on the display unit (140).

17. The computer-readable recording medium storing the display control program according to claim 15 or 16, wherein, in the step of displaying, a size of item display including the setting items on the second input unit operation screen (1420; 1430) is reduced to be smaller than a size of item display including the setting item on the first input unit operation screen (1410).

18. The computer-readable recording medium storing the display control program according to any one of claims 15 to 17, the program further including a step of:
displaying, on the display unit (140), a shared operation screen (1440) that accommodates operation of both the first input unit (141) and the second input unit (200).

19. The computer-readable recording medium storing the display control program according to any one of claims 15 to 18, wherein, in the step of displaying, when the first input unit (141) or the second input unit (200) becomes operable, the first input unit operation screen (1410) or the second input unit operation screen (1420; 1430) is displayed on the display unit (140).

20. The computer-readable recording medium storing the display control program according to any one of claims 15 to 19, wherein, in the step of displaying, in a case where operation is performed on any item of the menu display by the first input unit (141), the first input unit operation screen (1410) is displayed on the display unit (140).

21. The computer-readable recording medium storing the display control program according to any one of claims 15 to 20, wherein, in the step of displaying, in a case where operation is performed on any item of the menu display by the second input unit (200), the second input unit operation screen (1420; 1430) is displayed on the display unit (140).

22. The computer-readable recording medium storing the display control program according to any one of claims 15 to 21, wherein, in the step of displaying, in a case where operation is performed by the first input unit (141) while the second input unit operation screen (1420; 1430) is being displayed on the display unit (140), an alarm indicating that operation of only the second input unit (200) is allowed is issued.

23. The computer-readable recording medium storing the display control program according to any one of claims 15 to 22, wherein, in the step of displaying, in a case where operation is performed by the first input unit (141) while the second input unit operation screen (1420; 1430) is being displayed on the display unit (140), an inquiry of whether to change to the first input unit operation screen (1410) is displayed.

## Patentansprüche

1. Anzeigevorrichtung (140, 141, 200), die eine Bedienung durch zwei oder mehrere verschiedene Eingabeeinheiten gestattet, einschließlich einer ersten Eingabeeinheit (141) und einer zweiten Eingabeeinheit (200), wobei die Anzeigevorrichtung (140, 141, 200) aufweist:
eine Anzeigeeinheit (140) zum Ausführen von mindestens der Menüanzeige; und
eine Steuereinheit (110) zum Steuern der Eingabeeinheiten und zum Steuern von Anzeige- und/oder Bedienungsausgabe der Anzeigeeinheit gemäß einer Bedienung der Eingabeeinheiten (141, 200), wobei die Steuereinheit (110) fähig ist, auf der Anzeigeeinheit (140) eine erste Eingabeeinheit-Bedienungsbildschirmanzeige (1410) anzuzeigen, die eine Bedienung durch die erste Eingabeeinheit (141) aufnimmt, und die eine Anzeige eines Einstellungselements enthält, und eine zweite Eingabeeinheit-Bedienungsbildschirmanzeige (1420; 1430), die eine Bedienung durch die zweite Eingabeeinheit (200) aufnimmt, und die eine Anzeige einer größeren Anzahl von Einstellungselementen als die erste Eingabeeinheit-Bedienungsbildschirmanzeige (1410) enthält und wobei die Steuereinheit (110) bestimmt, dass die Bedienung von entweder der ersten Eingabeeinheit (141) oder der zweiten Eingabeeinheit (200) auf Grundlage des bedienbaren Zustands der zweiten Eingabeeinheit übernommen wird.

2. Anzeigevorrichtung (140, 141, 200) nach Anspruch 1, wobei die Steuereinheit (110) eine von der ersten Eingabeeinheit-Bedienungsbildschirmanzeige (1410) und der zweiten Eingabeeinheit-Bedienungsbildschirmanzeige (1420; 1430) auswählt und anzeigt, oder die erste Eingabeeinheit-Bedienungsbildschirmanzeige (1410) und die zweite Eingabeeinheit-Bedienungsbildschirmanzeige (1420; 1430) zusammen auf der Anzeigeeinheit (140) anzeigt.

3. Anzeigevorrichtung (140, 141, 200) nach Anspruch 1 oder 2, wobei die Steuereinheit (110) eine Größe der Elementanzeige mit den Einstellelementen auf der zweiten Eingabeeinheit-Bedienungsbildschirmanzeige (1420; 1430) so reduziert, dass sie kleiner als die Größe einer Elementanzeige mit dem Einstellelement auf der ersten Eingabeeinheit-Bedienungsbildschirmanzeige (1410) ist.

4. Anzeigevorrichtung (140, 141, 200) nach einem der Ansprüche 1 bis 3, wobei die Steuereinheit (110) auf der Anzeigeeinheit (140) eine gemeinsam genutzte Bedienungsbildschirmanzeige (1440) anzeigt, die eine Bedienung sowohl von der ersten Eingabeeinheit (141) als auch der zweiten Eingabeeinheit (200) aufnimmt.

5. Anzeigevorrichtung (140, 141, 200) nach einem der Ansprüche 1 bis 4, wobei, wenn die erste Eingabeeinheit (141) oder die zweite Eingabeeinheit (200) bedienbar wird, die Steuereinheit (110) die erste Eingabeeinheit-Bedienungsbildschirmanzeige (1410) oder die zweite Eingabeeinheit-Bedienungsbildschirmanzeige (1420; 1430) auf der Anzeigeeinheit (140) anzeigt.

6. Anzeigevorrichtung (140, 141, 200) nach einem der Ansprüche 1 bis 5, wobei in einem Fall, in dem die Bedienung auf irgendeinem Element der Menüanzeige durch die erste Eingabeeinheit (141) ausgeführt wird, die Steuereinheit (110) die erste Eingabeeinheit-Bedienungsbildschirmanzeige (1410) auf der Anzeigeeinheit (140) anzeigt.

7. Anzeigevorrichtung (140, 200, 200) nach einem der Ansprüche 1 bis 6, wobei in einem Fall, in dem die Bedienung auf irgendeinem Element der Menüanzeige durch die zweite Eingabeeinheit (200) ausgeführt wird, die Steuereinheit (110) die zweite Eingabeeinheit-Bedienungsbildschirmanzeige (1420; 1430) auf der Anzeigeeinheit (140) anzeigt.

8. Anzeigevorrichtung (140, 141, 200) nach einem der Ansprüche 1 bis 7, wobei in einem Fall, in dem die Bedienung durch die erste Eingabeeinheit (141) ausgeführt wird, während die zweite Eingabeeinheit-Bedienungsbildschirmanzeige (1420; 1430) auf der Anzeigeeinheit (140) angezeigt wird, die Steuereinheit (110) einen Alarm ausgibt, der angibt, dass nur die Bedienung der zweiten Eingabeeinheit (200) gestattet ist.

9. Anzeigevorrichtung (140, 141, 200) nach einem der Ansprüche 1 bis 8, wobei in einem Fall, in dem die Bedienung durch die erste Eingabeeinheit (141) ausgeführt wird, während die zweite Eingabeeinheit-Bedienungsbildschirmanzeige (1420; 1430) auf der Anzeigeeinheit (140) angezeigt wird, die Steuereinheit (110) eine Anzeige mit einer Anfrage ausführt, ob auf die erste Eingabeeinheit-Bedienungsbildschirmanzeige (1410) gewechselt werden soll.

10. Anzeigevorrichtung (140, 141, 200) nach Anspruch 9, wobei die Steuereinheit (110) die Anfrage anzeigt, ob durch die erste Eingabeeinheit-Bedienungsbildschirmanzeige (1410) auf die erste Eingabeeinheit-Bedienungsbildschirmanzeige (1410) gewechselt werden soll.

11. Anzeigevorrichtung (140, 141, 200) nach einem der Ansprüche 1 bis 10, wobei, wenn die Bedienung der ersten Eingabeeinheit (141) auf einem Bildschirm erkannt wird, während die zweite Eingabeeinheit-Bedienungsbildschirmanzeige (1420; 1430) auf der Anzeigeeinheit (140) angezeigt wird, die Steuereinheit (110) einen Teilbereich mit einem erkannten Bereich auf dem Bildschirm im Vergleich zu anderen Bereichen vergrößert anzeigt und die Bedienung durch die erste Eingabeeinheit (141) in dem Bereich ermöglicht, der vergrößert angezeigt wird.

12. Anzeigevorrichtung (140, 141, 200) nach einem der Ansprüche 1 bis 11, wobei in einem Fall, in dem die Bedienung durch die erste Eingabeeinheit (141) ausgeführt wird, während die zweite Eingabeeinheit-Bedienungsbildschirmanzeige (1420; 1430) auf der Anzeigeeinheit angezeigt wird, die Steuereinheit einen Umschalteprozess ausführt.

13. Bilderzeugungsvorrichtung (1), aufweisend;
eine Bilderzeugungseinheit (15) zum Erzeugen eines Bilds auf einem Papier; und Anzeigevorrichtung nach einem der Ansprüche 1 bis 12.

14. Bilderzeugungsvorrichtung (1) nach Anspruch 13, wobei die Steuereinheit (110) eine Anzeige einer ersten Eingabeeinheit-Bedienungsbildschirmanzeige (1410) oder einer zweiten Eingabeeinheit-Bedienungsbildschirmanzeige (1420; 1430) auf der Anzeigeeinheit (140) ermöglicht, nachdem die Bilderzeugungsvorrichtung (1) nach Beendigung eines Aufwärmens in den betriebsbereiten Zustand gegangen ist.

15. Computerlesbares Aufzeichnungsmedium, das ein Anzeigesteuerungsprogramm zum Steuern einer Anzeigevorrichtung (140, 141, 200) mit zwei oder mehreren verschiedenen Eingabeeinheiten mit einer ersten Eingabeeinheit (141) und einer zweiten Eingabeeinheit (200) und einer Anzeigeeinheit (140) zum Ausführen von mindestens der Menüanzeige enthält, wobei das Programm die Schritte enthält zum:
Erfassen eines Zustands der Eingabeeinheiten; und
auf der Anzeigeeinheit (140) zustandsgemäßes Anzeigen von einer oder beiden von einer ersten Eingabeeinheit-Bedienungsbildschirmanzeige (1410), die eine Bedienung durch die erste Eingabeeinheit (141) aufnimmt, und die eine Anzeige eines Einstellungselements enthält, und einer Bedienungsbildschirmanzeige einer zweiten Eingabeeinheit (200), die eine Bedienung durch die zweite Eingabeeinheit (200) aufnimmt, und die eine Anzeige einer größeren Anzahl von Einstellungselementen als die erste Eingabeeinheit-Bedienungsbildschirmanzeige (1410) enthält, und Bestimmen, dass die Bedienung von entweder der ersten Eingabeeinheit (141) oder der zweiten Eingabeeinheit (200) auf Grundlage des bedienbaren Zustands der zweiten Eingabeeinheit übernommen wird.

16. Computerlesbares Aufzeichnungsmedium, das das Anzeigesteuerungsprogramm nach Anspruch 15 speichert, wobei in dem Anzeigeschritt eine von der ersten Eingabeeinheit-Bedienungsbildschirmanzeige (1410) und der zweiten Eingabeeinheit-Bedienungsbildschirmanzeige (1420; 1430) ausgewählt und auf der Anzeigeeinheit (140) angezeigt wird, oder die erste Eingabeeinheit-Bedienungsbildschirmanzeige (1410) und die zweite Eingabeeinheit-Bedienungsbildschirmanzeige (1420; 1430) zusammen auf der Anzeigeeinheit (140) angezeigt werden.

17. Computerlesbares Aufzeichnungsmedium, das das Anzeigesteuerungsprogramm nach Anspruch 15 oder 16 speichert, wobei in dem Anzeigeschritt eine Größe der Elementanzeige mit den Einstellelementen auf der zweiten Eingabeeinheit-Bedienungsbildschirmanzeige (1420; 1430) so reduziert wird, dass sie kleiner als die Größe einer Elementanzeige mit dem Einstellelement auf der ersten Eingabeeinheit-Bedienungsbildschirmanzeige (1410) ist.

18. Computerlesbares Aufzeichnungsmedium, das das Anzeigesteuerungsprogramm nach einem der Ansprüche 15 bis 17 speichert, wobei das Programm ferner einen Schritt aufweist zum:
Anzeigen, auf der Anzeigeeinheit (140), einer gemeinsam genutzten Bedienungsbildschirmanzeige (1440), die eine Bedienung sowohl von der ersten Eingabeeinheit (141) als auch der zweiten Eingabeeinheit (200) aufnimmt.

19. Computerlesbares Aufzeichnungsmedium, das das Anzeigesteuerungsprogramm nach einem der Ansprüche 15 bis 18 speichert, wobei in dem Anzeigeschritt, wenn die erste Eingabeeinheit (141) oder die zweite Eingabeeinheit (200) bedienbar wird, die erste Eingabeeinheit-Bedienungsbildschirmanzeige (1410) oder die zweite Eingabeeinheit-Bedienungsbildschirmanzeige (1420; 1430) auf der Anzeigeeinheit (140) angezeigt wird.

20. Computerlesbares Aufzeichnungsmedium, das das Anzeigesteuerungsprogramm nach einem der Ansprüche 15 bis 19 speichert, wobei in dem Anzeigeschritt in einem Fall, in dem die Bedienung auf irgendeinem Element der Menüanzeige durch die erste Eingabeeinheit (141) ausgeführt wird, die erste Eingabeeinheit-Bedienungsbildschirmanzeige (1410) auf der Anzeigeeinheit (140) angezeigt wird.

21. Computerlesbares Aufzeichnungsmedium, das das Anzeigesteuerungsprogramm nach einem der Ansprüche 15 bis 20 speichert, wobei in dem Anzeigeschritt in einem Fall, in dem die Bedienung auf irgendeinem Element der Menüanzeige durch die zweite Eingabeeinheit (200) ausgeführt wird, die zweite Eingabeeinheit-Bedienungsbildschirmanzeige (1420) auf der Anzeigeeinheit (140) angezeigt wird.

22. Computerlesbares Aufzeichnungsmedium, das das Anzeigesteuerungsprogramm nach einem der Ansprüche 15 bis 21 speichert, wobei in dem Anzeigeschritt in einem Fall, in dem die Bedienung durch die erste Eingabeeinheit (141) ausgeführt wird, während die zweite Eingabeeinheit-Bedienungsbildschirmanzeige (1420; 1430) auf der Anzeigeeinheit (140) angezeigt wird, ein Alarm ausgegeben wird, der angibt, dass nur die Bedienung der zweiten Eingabeeinheit (200) gestattet ist.

23. Computerlesbares Aufzeichnungsmedium, das das Anzeigesteuerungsprogramm nach einem der Ansprüche 15 bis 22 speichert, wobei in dem Anzeigeschritt in einem Fall, in dem die Bedienung durch die erste Eingabeeinheit (141) ausgeführt wird, während die zweite Eingabeeinheit-Bedienungsbildschirmanzeige (1420; 1430) auf der Anzeigeeinheit (140) angezeigt wird, eine Anfrage angezeigt wird, ob auf die erste Eingabeeinheit-Bedienungsbildschirmanzeige (1410) gewechselt werden soll.

## Revendications

1. Dispositif d'affichage (140, 141, 200) permettant une utilisation à l'aide de deux unités d'entrée différentes, ou plus, comprenant une première unité d'entrée (141) et une seconde unité d'entrée (200), ledit dispositif d'affichage (140, 141, 200) comprenant :
une unité d'affichage (140) destiné à effectuer au moins l'affichage du menu ; et
une unité de commande (110) destinée à commander les unités d'entrée et destinée à commander l'affichage et/ou la sortie d'utilisation de l'unité d'affichage selon l'utilisation des unités d'entrée (141, 200),
ladite unité de commande (110) pouvant afficher, sur le dispositif d'affichage (140), un écran d'utilisation de première unité d'entrée (1410) supportant une utilisation par la première unité d'entrée (141) et comprenant l'affichage d'un élément de paramétrage et un écran d'utilisation de seconde unité d'entrée (1420 ; 1430) supportant l'utilisation par la seconde unité d'entrée (200) et comprenant l'affichage d'un plus grand nombre d'éléments de paramétrage que l'écran d'utilisation de première unité d'entrée (1410) et ladite unité de commande (110) déterminant que l'utilisation de l'une ou l'autre de la premier unité d'entrée (141) ou de la seconde unité d'entrée (200) est supposée sur la base de l'état d'utilisation de la seconde unité d'entrée.

2. Dispositif d'affichage (140, 141, 200) selon la revendication 1, ladite unité de commande (110) sélectionnant et affichant l'un de l'écran d'utilisation de première unité d'entrée (1410) et de l'écran d'utilisation de seconde unité d'entrée (1420, 1430) ou affichant l'écran d'utilisation de première unité d'entrée (1410) et l'écran d'utilisation de seconde unité d'entrée (1420 ; 1430) ensemble, sur l'unité d'affichage (140).

3. Dispositif d'affichage (140, 141, 200) selon la revendication 1 ou 2, ladite unité de commande (110) réduisant une taille d'affichage d'éléments comprenant les éléments de paramétrage sur l'écran d'utilisation de second unité d'entrée (1420, 1430) pour être inférieure à une taille d'affichage d'élément comprenant l'élément de paramétrage sur l'écran d'utilisation de premier unité d'entrée (1410).

4. Dispositif d'affichage (140, 141, 200) selon l'une quelconque des revendications 1 à 3, ladite unité de commande (110) affichant, sur l'unité d'affichage (140), un écran d'utilisation partagé (1440) supportant une utilisation de la première unité d'entrée (141) et de la seconde unité d'entrée (200).

5. Dispositif d'affichage (140, 141, 200) selon l'une quelconque des revendications 1 à 4, lorsque la première unité d'entrée (141) ou la seconde unité d'entrée (200) devienne utilisable, ladite unité de commande (110) affichant l'écran d'utilisation de première unité d'entrée (1410) ou l'écran d'utilisation de seconde unité d'entrée (1420, 1430) sur l'unité d'affichage (140).

6. Dispositif d'affichage (140, 141, 200) selon l'une quelconque des revendications 1 à 5, pour le cas où une utilisation est menée sur un quelconque élément de l'affichage de menu par la première unité d'entrée (141), ladite unité de commande (110) affichant l'écran d'utilisation de première unité d'entrée (1410) sur l'unité d'affichage (140).

7. Dispositif d'affichage (140, 141, 200) selon l'une quelconque des revendications 1 à 6, pour le cas où une utilisation est menée sur un quelconque élément de l'affichage de menu par la seconde unité d'entrée (200), ladite unité de commande (110) affichant l'écran d'utilisation de seconde unité d'entrée (1420, 1430) sur l'unité d'affichage (140).

8. Dispositif d'affichage (140, 141, 200) selon l'une quelconque des revendications 1 à 7, pour le cas où l'utilisation est menée par la première unité d'entrée (141) alors que l'écran d'utilisation de seconde unité d'entrée (1420, 1430) est affiché sur l'unité d'affichage (140), ladite unité de commande (110) émettant une alarme indiquant qu'une utilisation de la seconde unité d'entrée (200) uniquement est permise.

9. Dispositif d'affichage (140, 141, 200) selon l'une quelconque des revendications 1 à 8, pour le cas où l'utilisation est menée par la première unité d'entrée (141) alors que l'écran d'utilisation de seconde unité d'entrée (1420, 1430) est affiché sur l'unité d'affichage (140), ladite unité de commande (110) effectuant l'affichage d'une demande quant au basculement ou non vers l'écran de fonctionnement de première unité d'entrée (1410).

10. Dispositif d'affichage (140, 141, 200) selon la revendication 9, ladite unité de commande (110) affichant la demande quant au basculement ou non vers l'écran d'utilisation de premier unité d'entrée (1410) à l'aide de l'écran de fonctionnement de première unité d'entrée (1410).

11. Dispositif d'affichage (140, 141, 200) selon l'une quelconque des revendications 1 à 10, lorsque l'utilisation de la première unité d'entrée (141) sur un écran est détectée alors que l'écran d'utilisation de seconde unité d'entrée (1420, 1430) est affiché sur l'unité d'affichage (140), ladite unité de commande (110) affichant une zone partielle comprenant une zone détectée sur l'écran de manière élargie par rapport aux autres zones et permettant une utilisation de la première unité d'entrée (141) sur la zone qui est affichée de manière élargie.

12. Dispositif d'affichage (140, 141, 200) selon l'une quelconque des revendications 1 à 11, pour le cas où l'utilisation est effectuée par la première unité d'entrée (141) alors que l'écran d'utilisation de seconde unité d'entrée (1420 ; 1430) est affiché sur l'unité d'affichage, ladite unité de commande effectuant un processus de commutation.

13. Appareil de formation d'image (1) comprenant :
une unité de formation d'image (15) destinée à former une image sur un papier ; et le dispositif d'affichage selon l'une quelconque des revendications 1 à 12.

14. Appareil de formation d'image (1) selon la revendication 13, ladite unité de commande (110) permettant l'affichage d'un écran d'utilisation de première unité d'entrée (1410) ou d'un écran d'utilisation de seconde unité d'entrée (1420, 1430) sur l'unité d'affichage (140) après que l'appareil de formation d'image (1) entre dans un état « prêt » après la fin du préchauffage.

15. Support d'enregistrement lisible par ordinateur stockant un programme de commande d'affichage destiné à commander un dispositif d'affichage (140, 141, 200) comprenant deux unités d'entrée différentes, ou plus, comprenant une première unité d'entrée (141) et une seconde unité d'entrée (200) et une unité d'affichage (140) destinée à effectuer au moins l'affichage du menu, ledit programme comprenant les étapes de :
acquisition d'un état des unités d'entrée ; et
affichage, sur l'unité d'affichage (140), selon l'état, d'un écran d'utilisation de première unité d'entrée (1410) supportant une utilisation par la première unité d'entrée (141) et comprenant l'affichage d'un élément de paramétrage et un écran d'utilisation de seconde unité d'entrée (200) supportant une utilisation par la seconde unité d'entrée (200) et comprenant l'affichage d'un plus grand nombre d'éléments de paramétrage que l'écran d'utilisation de première unité d'entrée (1410) et la détermination que l'utilisation de l'une ou l'autre de la première unité d'entrée (141) ou de la seconde unité d'entrée (200) est supposée sur la base de l'état d'utilisation de la seconde unité d'entrée.

16. Support d'enregistrement lisible par ordinateur stockant le programme de commande d'affichage selon la revendication 15, dans l'étape d'affichage, l'un de l'écran d'utilisation de première unité d'entrée (1410) et de l'écran d'utilisation de seconde unité d'entrée (1420, 1430) étant sélectionné et affiché sur l'unité d'affichage (140), ou l'écran d'utilisation de première unité d'entrée (1410) et l'écran d'utilisation de seconde unité d'entrée (1420, 1430) étant affichés ensemble sur l'unité d'affichage (140).

17. Support d'enregistrement lisible par ordinateur stockant le programme de commande d'affichage selon la revendication 15 ou 16, dans l'étape d'affichage, une taille d'affichage d'éléments comprenant les éléments de paramétrage sur l'écran d'utilisation de seconde unité d'entrée (1420, 1430) étant réduite pour être inférieure à une taille d'affichage d'affichage d'élément compris l'élément de paramétrage sur l'écran d'utilisation de première unité d'entrée (1410).

18. Support d'enregistrement lisible par ordinateur stockant le programme de commande d'affichage selon l'une quelconque des revendications 15 à 17, le programme comprenant en outre une étape de :
affichage, sur l'unité d'affichage (140), d'un écran d'utilisation partagé (1440) supportant l'utilisation de la première unité d'entrée (141) et de la seconde unité d'entrée (200).

19. Support d'enregistrement lisible par ordinateur stockant le programme de commande d'affichage selon l'une quelconque des revendications 15 à 18, dans l'étape d'affichage, lorsque la première unité d'entrée (141) ou la seconde unité d'entrée (200) devient utilisable, ledit écran d'utilisation de première unité d'entrée (1410) ou ledit écran d'utilisation de seconde unité d'entrée (1420, 1430) étant affiché sur l'écran d'affichage (140).

20. Support d'enregistrement lisible par ordinateur stockant le programme de commande d'affichage selon l'une quelconque des revendications 15 à 19, dans l'étape d'affichage, pour le cas où l'utilisation est menée sur un quelconque élément de menu d'affichage par la première unité d'entrée (141), ledit écran d'utilisation de première unité d'entrée (1410) étant affiché sur l'unité d'affichage (140).

21. Support d'enregistrement lisible par ordinateur stockant le programme de commande d'affichage selon l'une quelconque des revendications 15 à 20, dans l'étape d'affichage, pour le cas où l'utilisation est menée sur un quelconque élément d'affichage du menu par la seconde unité d'entrée (200), ledit écran d'utilisation de seconde unité d'entrée (1420, 1430) étant affiché sur l'unité d'affichage (140).

22. Support d'enregistrement lisible par ordinateur stockant le programme de commande d'affichage selon l'une quelconque des revendications 15 à 21, dans l'étape d'affichage, pour le cas où l'utilisation est menée par la première unité d'entrée (141) alors que l'écran d'utilisation de seconde unité d'entrée (1420, 1430) est affiché sur l'unité d'affichage (140), une alarme indiquant qu'une utilisation de la seconde unité d'entrée (200) uniquement est permise, étant émise.

23. Support d'enregistrement lisible par ordinateur stockant le programme de commande d'affichage selon l'une quelconque des revendications 15 à 22, dans l'étape d'affichage pour le cas où l'utilisation est menée par la première unité d'entrée (141) alors que l'écran d'utilisation de seconde unité d'entrée (1420 ; 1430) est affiché sur l'unité d'affichage (140), une demande quant au basculement ou non vers l'écran d'utilisation de la première unité d'entrée (1410) s'affichant.
